# EUROPÄISCHE PATENTSCHRIFT

(11) **EP 1 090 460 B1**
(45) Veröffentlichungstag und Bekanntmachung des Hinweises auf die Patenterteilung: **12.12.2001**
(21) Anmeldenummer: 99938180.9
(22) Anmeldetag: 11.06.1999
(51) Int. Cl.: H03K 17/22

(54) **RESETSCHALTUNG**
RESET CIRCUIT
CIRCUIT DE REINITIALISATION

(30) Priorität: 22.06.1998 DE 19827705
(43) Veröffentlichungstag der Anmeldung: 11.04.2001
(73) Patentinhaber: SIEMENS AKTIENGESELLSCHAFT, 80333 München (DE)
(72) Erfinder: SWART, Marten, D-93083 Obertraubling (DE); WAGNER, Ekkehart-Peter, D-93077 Bad Abbach (DE); ZELGER, Christian, D-93049 Regensburg (DE)
(86) Internationale Anmeldenummer: DE9901720
(87) Internationale Veröffentlichungsnummer: WO9967881

(56) Entgegenhaltungen:
- EP-A- 0 374 968
- EP-A- 0 562 397
- EP-A- 0 595 748
- WO-A-98/05126
- US-A- 5 070 295

## Beschreibung

Die Erfindung betrifft eine Resetschaltung nach dem Oberbegriff des Anspruchs 1.

Eine Resetschaltung gattungsgemäßer Art dient dem Deaktivieren einer externen Schaltungskonfiguration bspw. in Form einer Microcontrollerschaltung, die von einer Versorgungsspannung betrieben wird und in einen stabilen, deaktivierten Zustand gebracht werden soll, wenn die Versorgungsspannung einen bestimmten Pegel unterschreitet, so daß Logikschaltkreise in Verbindung mit der Microcontrollerschaltung keine undefinierten Zustände einnehmen können, die externe Schaltungskonfiguration also deaktiviert ist.

Resetschaltungen nach dem Stand der Technik arbeiten z.B. mit einer von der Versorgungsspannung des Microcontrollers gespeisten Ladungspumpe und einem Transistor als Stellglied, an dem eine Vorspannung abfällt, die über die Ladungspumpe im Normalbetrieb sehr klein gehalten werden kann und die bei Unterspannungsversorgung einen relativ großen Wert annimmt und somit die Microcontrollerschaltung ab einer bestimmten Versorgungsspannung sicher deaktiviert. Dabei ergibt sich ein Hystereseeffekt, so daß die Microcontrollerschaltung erst wieder "anläuft", wenn die Versorgungsspannung über einen bestimmten Schwellwert ansteigt.

Schaltungen der zuvor genannten Art sind relativ komplex und kostenungünstig.

Aus DE 195 27 603 A1 ist eine elektrische Schaltungsanordnung zur Erzeugung eines Resetsignals bei Unterspannungsversorgung eines Mikrocomputers bekannt, welche eine an einer zu überwachenden Spannung liegende Reihenschaltung eines npn-Transistors und eines Widerstandes aufweist, an deren Verbindungspunkt das Resetsignal abgreifbar ist. Der Widerstand muß relativ hochohmig sein, um die thermische Belastung des Transistors in Grenzen zu halten. Dieser Widerstand bildet zusammen mit im Mikrocomputer befindlichen, mit dem Pluspol der zu überwachenden Spannung verbundenen Widerständen einen Spannungteiler, wodurch ein eindeutiges Resetsignal (Lowsignal) nicht gewährleistet ist.

Die EP 0 767 416 A1 offenbart eine Schaltung zur Spannungsversorgung eines Mikrocomputers mit Erzeugung eines Resetsignals bei Unterspannungsversorgung, welche mehrere Kondensatoren aufweist. In der Zeit zwischen dem Unterschreiten der Mindestversorgungsspannung und dem Erscheinen eines Resetsignals können undefinierte Zustände entstehen, welche unter allen Umständen zu vermeiden sind.

Der vorliegenden Erfindung liegt daher die Aufgabe zugrunde, eine Resetschaltung für eine externe Schaltungskonfiguration anzugeben, die über einen weiten Versorgungsspannungsbereich verläßlich arbeitet, die mit wenigen Bauelementen auskommt und somit kostengünstig und einfach integrierbar ist.

Diese Aufgabe wird durch den kennzeichnenden Teil des Anspruchs 1 gelöst.

Die erfindungsgemäße Resetschaltung hat den Vorteil, daß nur ein Minimum an Bauelementen benötigt wird und das deaktivieren der externen Schaltungskonfiguration zuverlässig erfolgt.

Weitere vorteilhafte Ausgestaltungen der Erfindung ergeben sich aus den Unteransprüchen.

Ausführungsbeispiele der Erfindung sind in der Zeichnung näher dargestellt.

Es zeigen:
- Fig. 1:: Ein erstes Schaltbild einer Resetschaltung,
- Fig. 2a:: den Verlauf des Stroms der Stromquelle 11 über der Versorgungsspannung,
- Fig. 2b:: den Verlauf des Stroms der Stromquelle 10 über der Versorgungsspannung,
- Fig. 3:: ein zweites Ausführungsbeispiel einer Resetschaltung,
- Fig. 4a:: den Verlauf des Stroms IPD durch den Transistor 2,
- Fig. 4b:: den Verlauf des Stroms IPU durch den Transistor 3.

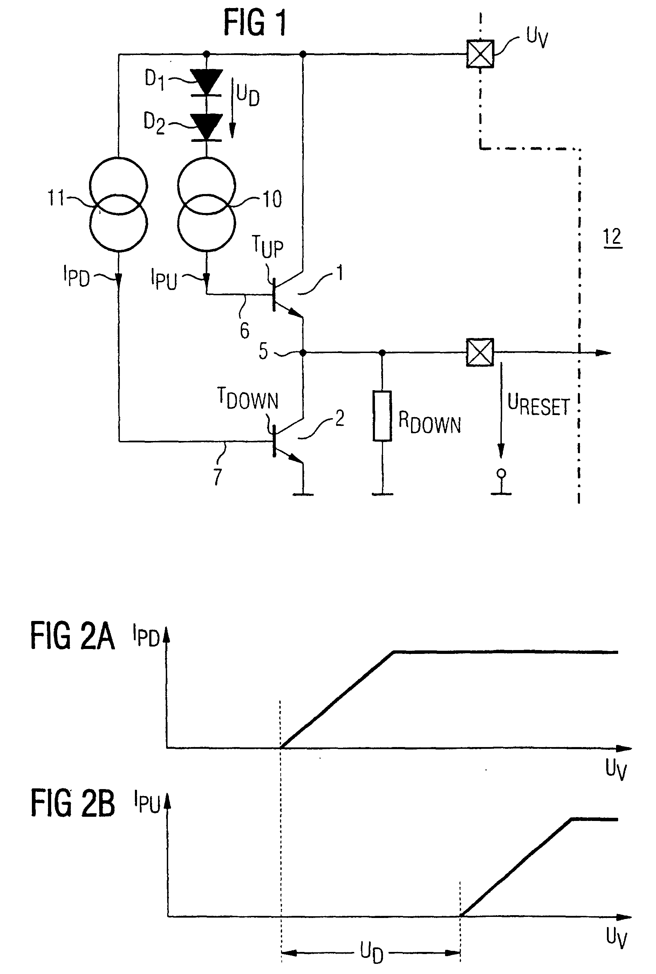

Die in Fig. 1 dargestellte Ausführungsform eines ersten Beispiels der erfindungsgemäßen Resetschaltung zeigt mit den Bezugszeichen 1 und 2 zwei zwischen Versorgungsspannung Uv und Massebezugspotential mit ihren Durchlaßstrecken in Serie geschaltete aktive Schaltelemente. An ihrem Verbindungspunkt 5 steht das Resetsignal Ureset als aktiv Low-Signal an zum Deaktivieren bspw. einer externen Microcontrollerschaltung 12. Der Verbindungspunkt 5 ist über den Widerstand Rdown mit Massebezugspotential verbunden. Der Widerstand Rdown kann auch weggelassen werden. Bei den aktiven Schaltelementen 1 und 2 handelt es sich im Ausführungsbeispiel um bipolare npn-Transistoren Tup und Tdown. Die Basen als Steueranschlüsse 6,7 der aktiven Schaltelemente 1,2 in Form der bipolaren Transistoren Tup und Tdown werden direkt über je eine von der Versorgungsspannung Uv gespeiste Stromquelle 10 und 11 mit den Strömen IPU bzw. IPD angesteuert. Die eine Stromquelle 10 ist über mindestens eine in Durchlaßrichtung gepolte Diode D1 mit der Versorgungsspannung Uv verbunden. In der bevorzugten Ausführungsform der Fig. 1 sind zwischen Stromquelle 10 und Versorgungsspannung Uv zwei oder mehr in Durchlaßrichtung gepolte Dioden D1, D2 vorgesehen.

Die Funktionsweise des in Fig. 1 gezeigten ersten Ausführungsbeispiels sei anhand der Diagramme der Fig. 2a und 2b erläutert.

Wenn die Versorgungsspannung Uv einen zum Betreiben der externen Schaltungskonfiguration 12 bspw. in Form eines Microcontrollers ausreichend hohen Pegel von bspw. 5V aufweist, fließen die Ströme IPU und IPD zur Ansteuerung des jeweiligen aktiven Schaltelements 1 und 2 in Form der bipolaren npn-Transistoren Tup bzw. Tdown und es stellt sich am Verbindungspunkt 5 aufgrund der gewählten Ströme IPU und IPD und aufgrund der Kennliniencharakteristik der beiden bipolaren Transistoren Tup bzw. Tdown ein High-Pegel ein. Die externe Schaltungskonfiguration 12 wird dadurch nicht deaktiviert sondern verbleibt in ihrem Betriebszustand. Sinkt dann der der Pegel der Versorgungsspannung Uv soweit ab, daß aufgrund der Schwellspannung der zwei Dioden D1 und D2 die Stromquelle 10 keinen ausreichenden Ansteuerstrom für die Basis des Transistors Tup liefern kann, geht das Potential am Verbindungspunkt 5 dann auf einen Low-Pegel. Die Microcontrollerschaltung 12 wird dadurch deaktiviert.

Jede Stromquelle benötigt für den Betrieb eine gewisse Abfallspannung. Durch das Einfügen der zwei Dioden D1 und D2 wird die zur Verfügung stehende Spannung für die den Transistor Tup ansteuernde Stromquelle IPU verringert. Auf diese Weise kann sichergestellt werden, daß bei fallernder Versorgungsspannung Uv zuerst der Strom IPU absinkt und danach erst der Strom IPD, der den Transistor Tdown ansteuert. Die Durchlaßstrecke des Transistors Tdown wird also noch bei niedrigerer Versorgungsspannung Uv niederohmig gehalten als die des Transistors Tup. Daher wird das Resetsignal Ureset bei fallender Versorgungsspannung Uv auf alle Fälle auf einen Low-Pegel gezogen. Ist die Versorgungsspannung Uv dann so niedrig, daß auch der Strom IPD der Stromquelle 11 zum Erliegen kommt, übernimmt der Widerstand Rdown die Aufgabe, das Resetsignal Ureset defeniert auf einem Low-Pegel zu halten.

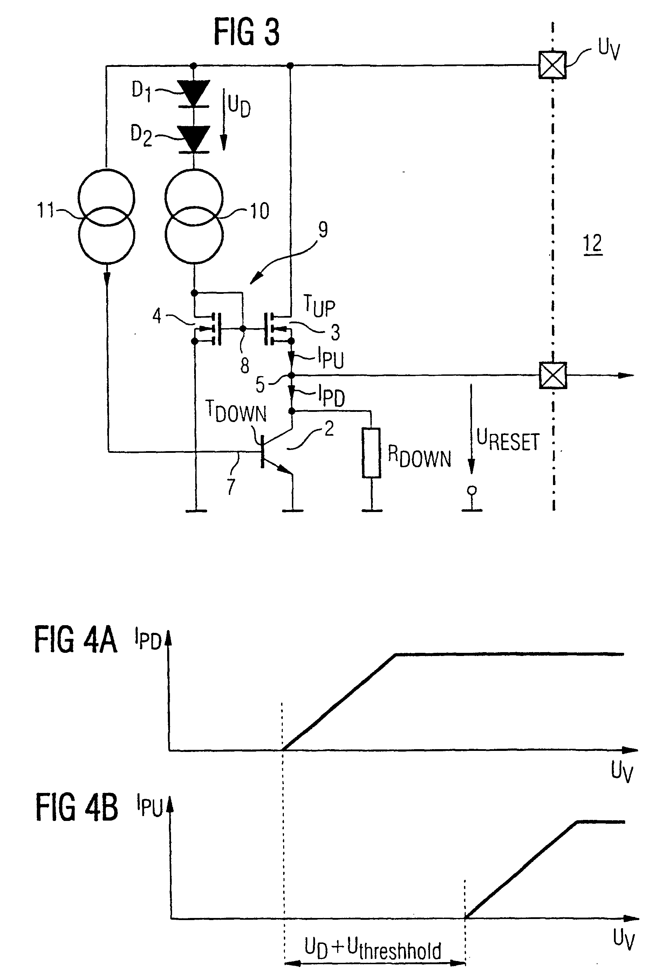

Das in Fig. 3 dargestellte zweite Ausführungsbeispiel der erfindungsgemäßen Resetschaltung funktioniert prinzipiell ähnlich wie das in Fig. 1 gezeigte.

Als aktive Schaltelemente sind eine aus Feldeffekttransistoren 3,4 gebildete Stromspiegelschaltung 9 und ein bipolarer Transistor vorgesehen. Der vom Feldeffekttransistor 4 auf den Feldeffekttransistor 3 gespiegelte Strom ist mit IUP bezeichnet und der durch die Kollektor-Emitterstrecke des bipolaren Transistors 2 fließende Strom mit IPD. Es handelt sich bei den Strömen IUP und IPD jeweils um die um den Stromverstärkungsfaktor der Transistoren vergrößerten Strom der Stromquelle 10 und 11. Die Gate-Elektrode 8 beider Feldeffekttransistoren 3,4 ist mit der Stromquelle 10 und mit der Drain-Elektrode des Feldeffekttransistors 4 verbunden.

Die Funktionsweise ergibt sich aus den Diagrammen der Figuren 4a und 4b, die prinzipiell mit den Figuren 2a,b identisch sind.
Es zeigt sich bei den Figuren 4a,b lediglich der Unterschied, daß zu den Diodendurchlaßspannungen Ud der beiden Dioden D1 und D2 die Thresholdspannung der Feldeffekttransistoren als Gate-Source-Spannung überlagert wird, die zusätzlich ca. 2V beträgt. Daher können die Dioden D1 und D2 bei Verwendung der Stromspiegelschaltung mit den Feldeffekttransistoren auch entfallen.

Die Stromspiegelschaltung 9 ist dadurch gekennzeichnet, daß der eine Feldeffekttranistor 3 mit seiner Drain-Source-Strecke zwischen Versorgungsspannung Uv und dem Verbindungspunkt 5 liegt und der andere Feldeffekttranistor 4 mit seiner Drain-Source-Strecke zwischen der einen Stromquelle 10 und Massebezugspotential. Die Gate-Elektroden 8 beider Feldeffekttranistoren 3,4 sind zusammengeschaltet und mit der einen Stromquelle 10 verbunden.

Das Resetsignal Ureset ist ein aktiv Low-Signal.

Die beschriebenen Schaltungen der Fig. 1 und 3 können auch als Ergänzung zu einer Komparatorschaltung (nicht dargestellt) zum Einsatz kommen. Durch eine derartige Komparatorschaltung wird die Genauigkeit der Resetschwelle deutlich gesteigert.

Durch die beschriebenen Schaltungen wird ein sicheres Resetsignal Ureset auch bei Unterschreiten der minimalen Betriebsspannung des Komparators garantiert.

Die erfindungsgemäße Resetschaltung ist gekennzeichnet durch die Verwendung in der Kraftfahrzeugelektronik.

## Patentansprüche

1. Resetschaltung zum Deaktivieren einer von einer Versorgungsspannung (Uv) gespeisten Schaltungskonfiguration (12) bei Unterspannungsversorgung,
welche aus zwei zwischen Versorgungsspannung (Uv) und Massebezugspotential mit ihren Durchlaßstrecken in Serie geschalteten aktiven Schaltelementen (1-2; 4,3-2) besteht,
deren Verbindungspunkt (5), an welchem ein Resetsignal (Ureset) abgreifbar ist, über einen Widerstand (Rdown) mit Massebezugspotential verbunden ist,
wobei die Steueranschlüsse (6-7, 7-8) der aktiven Schaltelemente (1-2, 4,3-2) von je einer von der Versorgungsspannung (Uv) gespeisten Stromquelle (10, 11) ansteuerbar sind, und
wobei die eine Stromquelle (10) über wenigstens eine in Durchlaßrichtung gepolte Diode (D1, D2) und die andere Stromquelle (11) direkt mit der Versorgungsspannung (Uv) verbunden ist.

2. Resetschaltung nach Anspruch 1, **dadurch gekennzeichnet, daß** die aktiven Schaltelemente (1, 2, 3, 4) aus bipolaren oder Feldeffekttransistoren bestehen.

3. Resetschaltung nach Anspruch 1 oder 2, **dadurch gekennzeichnet, daß** das aktive Schaltelement (3), welches mit seiner Drain-Source-Strecke zwischen Versorgungsspannung (Uv) und dem Verbindungspunkt (5) liegt und von der einen Stromquelle (10) angesteuert wird, Teil einer Stromspiegelschaltung (9) ist, die ein zweites, von der einen Stromquelle (10) angesteuertes aktives Schaltelement (4) aufweist, das mit seiner Drain-Source-Strecke zwischen der einen Stromquelle (10) und Massebezugspotential liegt.

4. Resetschaltung nach einem der Ansprüche 1 bis 3, **dadurch gekennzeichnet, daß** das Resetsignal (Ureset) am Verbindungspunkt (5) aktiv Low ist.

5. Resetschaltung nach einem der vorhergehenden Ansprüche, **gekennzeichnet durch** die Verwendung in der Kraftfahrzeugelektronik.

## Claims

1. Reset circuit for the deactivation of a circuit configuration (12) fed from a supply voltage (UV) in the event of a supply under-voltage,
which circuit comprises two active switching elements (1-2; 4,3-2) with their on-state paths connected in series between supply voltage (UV) and earth reference potential,
whose connection point (5), at which a reset signal (Ureset) can be picked off, is connected by way of a resistor (Rdown) to earth reference potential,
where the gate terminals (6-7, 7-8) of the active switching elements (1-2; 4,3-2) can each be driven by a current source (10, 11) fed by the supply voltage (UV), and
where the one current source (10) is connected by way of at least one diode (D1, D2) polarised in the forward direction and the other current source (11) is connected directly to the supply voltage (UV).

2. Reset circuit in accordance with Claim 1, **characterised in that** the active switching elements (1, 2, 3, 4) consist of bipolar or field-effect transistors.

3. Reset circuit in accordance with Claim 1 or 2, **characterised in that** the active switching element (3), which is situated with its drain-source path between supply voltage (Uv) and the connection point (5) and is driven by the one current source (10), forms part of a current mirroring circuit (9) which has a second active switching element (4), driven by the one current source (10), which is situated with its drain-source path between the one current source (10) and earth reference potential.

4. Reset circuit in accordance with one of Claims 1 to 3, **characterised in that** the reset signal (Ureset) at the connection point (5) is an active low signal.

5. Reset circuit in accordance with one of the preceding Claims, **characterised by** its utilisation in motor vehicle electronics.

## Revendications

1. Circuit de remise à l'état initial pour désactiver une configuration de circuit (12) alimentée par une tension d'alimentation (Uv), dans le cas d'une alimentation avec une tension trop faible,
qui est constitué de deux éléments de commutation actifs (1-2; 4; 3-2), branchés en série, avec leurs trajets de conduction, entre la tension d'alimentation (Uv) et le potentiel de référence de masse,
dont le point de raccordement (5), auquel peut être prelevé un signal de remise à l'état initial (Ureset), est relié, par une résistance (Rdown), au potentiel de référence de masse,
les bornes de commande (6-7, 7-8) des éléments de commutation actifs (1-2; 4; 3-2) pouvant être chacun commandés par une source de courant (10, 11) alimentée par la tension d'alimentation (Uv), et
l'une des sources de courant (10) étant reliée à la tension d'alimentation (Uv) par l'intermédiaire d'au moins une diode (D1, D2) polarisée dans le sens de passage, et l'autre source de courant (11) étant reliée directement à la tension d'alimentation (Uv).

2. Circuit de remise à l'état initial suivant la revendication 1, **caractérisé en ce que** les éléments de commutation actifs (1, 2, 3, 4) sont constitués de transistors bipolaires ou de transistors à effet de champ.

3. Circuit de remise à l'état initial suivant la revendication 1 ou 2, **caractérisé en ce que** l'élément de commutation actif (3), qui est placé, avec son trajet drain-source, entre la tension d'alimentation (Uv) et le point de raccordement (5) et qui est commandé par une des sources de courant (10), est une partie d'un miroir de courant (9), qui présente un deuxième élément logique actif (4) activé par cette source de courant (10), cet élément logique étant placé, avec son trajet drain-source, entre cette source de courant (10) et le potentiel de référence de masse.

4. Circuit de remise à l'état initial suivant l'une des revendications 1 à 3, **caractérisé en ce que** le signal de remise à l'état initial (Ureset) sur le point de raccordement (5) est un signal actif bas.

5. Circuit de remise à l'état initial suivant l'une des revendications précédentes, **caractérisé par** son utilisation en électronique pour véhicules automobiles.
